# DEMANDE DE BREVET EUROPEEN

(11) **EP 1 646 239 A1**
(43) Date de publication de la demande: **12.04.2006**
(21) Numéro de dépôt: 05292024.6
(22) Date de dépôt: 28.09.2005
(51) Int. Cl.: H04N 7/173

(54) **Procédé et système de transmission d'un message vidéo vers un poste de télévision**

(30) Priorité: 07.10.2004 FR 0410578
(71) Demandeur: France Telecom S.A., 75015 Paris (FR)
(72) Inventeur: Le Huerou, Emmanuel, 22700 St Quay Perros (FR); Pontiggia, Michael, 22300 Lannion (FR); Berthelot, Bertrand, 35700 Rennes (FR)
(74) Mandataire: Maillet, Alain

(57) **Abrégé**

La présente invention concerne un procédé de transmission de données vers un poste de télévision TVS.

Le procédé selon l'invention inclut :
- une étape de création de stimuli audiovisuels,
- une étape d'élaboration d'un message vidéo Vmds destiné à véhiculer ces stimuli et muni d'un identifiant de son destinataire,
- une étape d'identification du destinataire,
- une étape de transmission du message vidéo sous forme d'un flux de données numériques Vds, et
- une étape de conversion dudit flux de données numériques Vds en un signal analogique Tvms compatible avec un format d'entrée prédéfini pour ledit poste de télévision TVS.

L'invention permet à un particulier d'émettre vers un destinataire de son choix un message textuel auquel auront été préalablement associés des stimuli audiovisuels spécifiquement et expressément prévus à l'intention de ce destinataire.

## Description

La présente invention concerne un procédé et un système de transmission de données permettant une restitution de stimuli visuels au moyen d'un poste de télévision.

Les postes de télévision permettent traditionnellement de restituer des stimuli visuels et auditifs définis par des signaux analogiques reçus par ledit poste, lesquels signaux analogiques sont le plus souvent produits soit par un décodeur destiné à recevoir des informations depuis un réseau câblé ou une antenne de réception d'ondes électromagnétiques, soit directement par une telle antenne, et sont compatibles avec un format d'entrée prédéfini pour le poste de télévision concerné, par exemple un format PAL, SECAM ou NTSC (abréviations connues de l'homme du métier des expressions "Phase Alternate Line", "Séquentiel à Mémoire" et "National Television Systems Committee", respectivement).

Selon une tendance apparue de façon relativement récente dans l'état de la technique, ces postes de télévision traditionnels, qui équipent une grande partie des foyers des pays industrialisés et y sont culturellement parfaitement intégrés, sont utilisés dans le cadre de nouvelles applications en tant que terminaux destinataires d'images et de sons initialement émis sous forme de signaux numériques, en particulier des signaux de données aptes à être véhiculés par un réseau de communication de type Internet. Dans une telle application, les signaux de données numériques sont convertis en analogique par un dispositif de conversion disposé en amont du poste de télévision, toute opération de définition, de stockage et de transmission desdites données antérieure à la conversion pouvant être réalisée par des moyens numériques d'acquisition, de traitement, de mémorisation et de transmission de données.

Dans l'état actuel de la technique, un possesseur de poste de télévision connecté au réseau Internet *via* un dispositif de conversion peut ainsi recevoir en direct, au sens "en synchronisme avec l'émission", un bouquet de programmes de télévision qui lui sera ainsi envoyé sous forme numérique par une liaison câblée, plutôt qu'en analogique par une liaison hertzienne plus sensible aux aléas climatiques et/ou électromagnétiques, un signal analogique ne pouvant en outre être reconstitué à sa réception, contrairement à ce qui peut être réalisé pour un signal numérique dont une perte d'intégrité peut être détectée et corrigée par son récepteur.

D'autres applications de transmission de programmes audiovisuels numériques consistent à faire parvenir à un destinataire possesseur d'un poste de télévision, après formulation par ce destinataire d'une requête spécifique, un flux de données numériques représentatives d'une oeuvre audiovisuelle sélectionnée par ce destinataire, par exemple une oeuvre cinématographique. Selon la nature de la requête, et en particulier selon l'importance d'une somme d'argent versée par le destinataire en accompagnement de sa requête. Ce destinataire pourra par exemple être autorisé à mémoriser le flux de données en vue de pouvoir en faire plusieurs lectures de manière asynchrone par rapport à la source de l'oeuvre, c'est-à-dire à n'importe quel moment autre que le moment de transmission du flux de données, à condition par exemple de verser une somme plus importante qu'une somme qui ne lui permettrait que de lire une fois le flux de données de manière synchrone par rapport à la source de l'oeuvre, c'est-à-dire sans possibilité de mémoriser ce flux.

Cependant, les applications mentionnées ci-dessus ne permettent à l'heure actuelle d'utiliser les postes de télévision que dans le but de restituer des programmes et des oeuvres prédéfinis de manière uniforme pour une multitude de destinataires potentiels, et ne permettent pas à un particulier de faire parvenir au poste de télévision d'un destinataire de son choix un message audiovisuel qui serait spécifiquement prévu à l'intention particulière de ce destinataire, ayant par exemple été spécialement conçu et réalisé en fonction de caractéristiques propres audit destinataire dont l'émetteur pourrait connaître ou supposer l'existence.

L'un des buts de l'invention est de rendre possible une telle personnalisation des programmes aptes à être transmis vers un poste de télévision *via* un réseau de communication de nature numérique.

En effet, un procédé conforme au paragraphe introductif est caractérisé selon un premier aspect de l'invention en ce qu'il inclut :
. une étape de création d'au moins un ensemble de données numériques représentatives de stimuli audiovisuels,
. une étape d'élaboration d'un message textuel dit message vidéo, lequel message étant destiné à être associé audit ensemble de données et à être muni d'au moins un identifiant définissant au moins un destinataire dudit message,
. une étape d'identification du destinataire au moyen de son identifiant,
. une étape de transmission du message vidéo vers ledit destinataire sous forme d'un flux de données numériques, et
. une étape de conversion dudit flux de données numériques en un signal analogique compatible avec un format d'entrée prédéfini pour ledit poste de télévision.

L'invention permet à un particulier d'émettre vers un destinataire unique ou un groupe de destinataires de son choix, chaque destinataire étant spécifiquement et expressément défini par son identifiant, par exemple une adresse de type "e-mail" ou une adresse de type "URL" (abréviations connues de l'homme du métier des expressions anglaises "Electronic Mail" et "Universal Resource Location", respectivement), un message textuel auquel aura été préalablement associé l'ensemble de données numériques représentatives de stimuli audiovisuels spécifiquement et expressément prévus à l'intention de ce destinataire. L'ensemble de données peut être associé au message textuel sous forme d'une pièce jointe, mais aussi au moyen d'un lien hypertexte pointant sur un endroit où l'ensemble de données a été mis à disposition du ou des destinataires.

Un procédé tel celui décrit ci-dessus inclura en outre avantageusement une étape d'avertissement, destinée à être exécutée postérieurement à une étape de transmission, au cours de laquelle un stimulus d'avertissement est produit au destinataire en vue de l'informer qu'un message vidéo a été émis à son intention.

Une telle étape d'avertissement permettra d'informer de manière peu intrusive le destinataire d'un message vidéo qu'un tel message lui a été transmis et est à sa disposition, sans pour autant déclencher une projection intempestive de l'ensemble de ce message sur l'écran du poste de télévision de ce destinataire. Le stimulus d'avertissement pourra être produit au destinataire sur son poste de télévision sous forme d'une image, éventuellement associée à un son ou à une mélodie. Alternativement ou cumulativement, le stimulus d'avertissement pourra également être produit sur un terminal distinct du poste de télévision, comme par exemple un téléphone mobile dont serait également muni le destinataire, et dont le numéro aurait été également connu de l'émetteur du message et indiqué par lui, ou bien extrait d'une base de données où ledit numéro aura été préalablement mémorisé en correspondance avec l'identifiant du destinataire. Le stimulus d'avertissement pourra alors être matérialisé par une sonnerie ou une vibration produite par ce téléphone mobile, mais aussi par une image si ce téléphone mobile est muni d'un écran suffisamment performant.

Selon un mode de réalisation spécifique de cet aspect de l'invention, l'étape d'avertissement inclura de préférence les sous-étapes suivantes :
. une sous-étape d'extraction, depuis ledit ensemble de données, d'un sous-ensemble de données représentatives d'une première image précédant toute autre image incluse dans le message vidéo,
. une sous-étape de conversion des données incluses dans le sous-ensemble ainsi extrait en un signal d'alerte compatible avec ledit format d'entrée, et
. une sous-étape d'alerte au cours de laquelle ladite première image est affichée sur l'écran de télévision du destinataire, préalablement à tout affichage d'une image chronologiquement postérieure à la première image.

Les sous-étapes d'extraction, de conversion et d'alerte définies ci-dessus permettent d'attirer l'attention du destinataire sur l'arrivée d'un message vidéo qui lui est destiné, sans pour autant déclencher une projection intempestive de l'ensemble de ce message sur l'écran du poste de télévision de ce destinataire, dans des conditions qui pourraient être désagréables ou gênantes pour ce destinataire ou son entourage immédiat à l'instant où le message vidéo lui parvient. Le destinataire pourra, au vu de la première image affichée lors de la sous-étape d'alerte, déterminer s'il souhaite visionner le message vidéo immédiatement ou, au contraire, surseoir à une telle opération jusqu'à ce que des conditions plus favorables soient réunies. Dans certains modes de mise en oeuvre de l'invention, l'exécution des sous-étapes d'extraction, de conversion et d'alerte définies ci-dessus pourra être postérieure à une émission préalable d'un stimulus d'avertissement sur un terminal distinct du poste de télévision du destinataire, par exemple un téléphone mobile.

Ainsi, dans une variante du mode de mise en oeuvre particulier décrit ci-dessus, tout affichage d'images chronologiquement postérieures à la première image est subordonné à une exécution préalable par le destinataire d'une étape de commande d'affichage consécutive à une étape d'alerte.

Par ailleurs, afin de limiter le volume de télécommunication généré par la mise en oeuvre de l'invention, un procédé décrit ci-dessus inclura de préférence une étape de conversion en un format compressé de l'ensemble de données associé au message vidéo, laquelle étape de conversion est destinée à être exécutée préalablement à l'étape de transmission.

Selon un autre de ses aspects, relatif à son implémentation matérielle, l'invention concerne en outre un système de transmission de données permettant une restitution de stimuli visuels au moyen d'un poste de télévision, lequel système inclut :
. des moyens de création d'au moins un ensemble de données numériques représentatives de stimuli audiovisuels,
. des moyens d'élaboration d'un message textuel dit message vidéo, lequel message étant destiné à être associé audit ensemble de données et à être muni d'au moins un identifiant définissant au moins un destinataire dudit message,
. des moyens d'identification du destinataire au moyen de son identifiant,
. des moyens de transmission du message vidéo vers ledit destinataire sous forme d'un flux de données numériques, et
. des moyens de conversion dudit flux de données numériques en un signal analogique compatible avec un format d'entrée prédéfini pour ledit poste de télévision.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La Fig.1 est un schéma de principe qui représente un système de télécommunication conforme à un mode de réalisation particulier de l'invention,
La Fig.2 est un schéma fonctionnel qui représente des moyens de création d'un message vidéo inclus dans ce système de télécommunication, et
La Fig.3 est un schéma fonctionnel qui représente des moyens de traitement et d'interfaçage inclus dans inclus dans ce système de télécommunication.

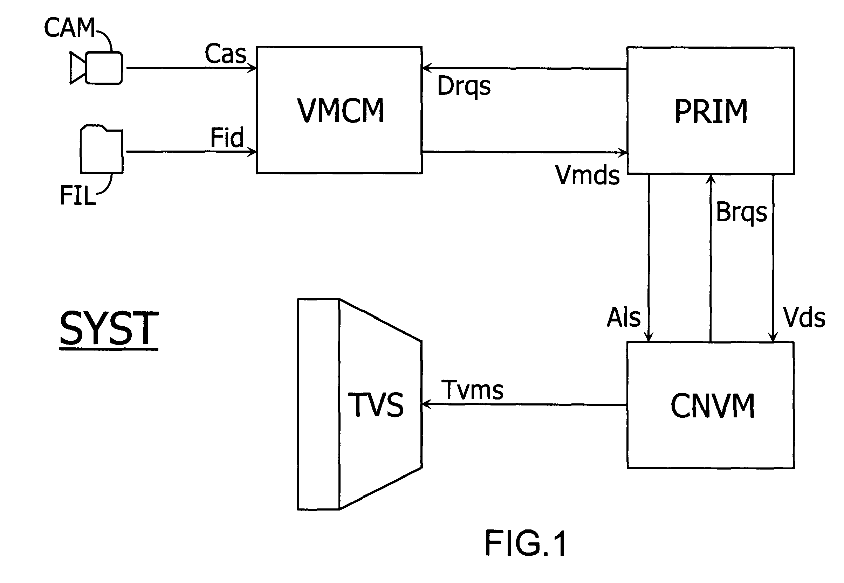

La Fig.1 représente schématiquement un système de télécommunication qui permet à un particulier de faire parvenir à un poste de télévision TVS mis à disposition d'un destinataire de son choix un message audiovisuel qui serait spécifiquement prévu à l'intention particulière de ce destinataire. A cet effet, le système de télécommunication SYST inclut :
. des moyens de création d'un ensemble de données numériques représentatives de stimuli audiovisuels, incluant dans cet exemple une caméra CAM destinée à générer un signal Cas représentatif de tels stimuli, qui constitueront alors une séquence vidéo,
. des moyens d'élaboration VMCM d'un message textuel dit message vidéo Vmds, lequel message étant destiné à être associé audit ensemble de données et à être muni d'au moins un identifiant définissant un destinataire dudit message,
. des moyens d'identification du destinataire au moyen de son identifiant, inclus ici dans des moyens de traitement et d'interfaçage PRIM,
. des moyens de transmission du message vidéo vers ledit destinataire sous forme d'un flux de données visuelles Vds, et
. des moyens de conversion CNVM dudit flux de données audiovisuelles Vds en un signal analogique Tvms compatible avec un format d'entrée prédéfini pour le poste de télévision TVS.

Les moyens de conversion CNVM pourront être constitués par un appareil de type "boîtier décodeur" (type également connu de l'homme du métier sous l'appellation anglaise "Set Top Box"), intégrant un décodeur de signaux audiovisuels numériques, par exemple conformes au standard MPEG2 ou MPEG4 (abréviations dérivées de l'appellation anglaise connue de l'homme du métier "Motion Picture Expert Group"), et une unité centrale apte à mettre en oeuvre un navigateur Internet permettant auxdits moyens de conversion CNVM de communiquer via le réseau Internet avec les moyens de traitement et d'interfaçage PRIM.

La caméra CAM pourra être constituée par n'importe quel appareil numérique de prise de vues, par exemple un caméscope numérique, une caméra de type Webcam ou encore une caméra intégrée dans un téléphone mobile. Dans d'autres modes de réalisation de l'invention, la caméra CAM et les moyens d'élaboration VMCM pourront être intégrés au sein d'un même appareil. L'ensemble de données numériques pourra en outre avoir été antérieurement généré et enregistré par une caméra et être alors délivré aux moyens d'élaboration VMCM sous forme d'un fichier de données préenregistrées.

Conformément à la description qui précède, les moyens d'élaboration VMCM sont en outre aptes à recevoir des données Fid définies par au moins un fichier textuel FIL, dans lequel l'émetteur des données audiovisuelles aura défini, outre le contenu éventuel d'un message d'accompagnement, le destinataire à l'intention duquel il aura généré ou sélectionné lesdites données audiovisuelles, laquelle définition sera par exemple effectuée au moyen d'une adresse de type "e-mail" ou d'une adresse de type URL.

Le message vidéo Vmds sera de préférence mémorisé par les moyens d'élaboration VMCM et tenu à disposition des moyens de traitement et d'interfaçage PRIM, pour éviter de saturer ceux-ci par une production spontanée de flux dont la lecture ne sera pas nécessairement sollicitée ou simplement souhaitée par leurs destinataire. Dans un tel cas de figure, qui est prévu dans le système SYST décrit ici, un flux de données numériques Vmds ne sera effectivement délivré par les moyens d'élaboration VMCM aux moyens de traitement et d'interfaçage PRIM qu'à condition qu'une requête Drqs ait préalablement été émise à cet effet par lesdits moyens de traitement et d'interfaçage PRIM à destination des moyens d'élaboration VMCM.

Par ailleurs, dans le mode de réalisation particulier décrit par la présente Figure, les moyens de traitement et d'interfaçage PRIM incluent des moyens pour produire un signal numérique d'alerte Als porteur des données incluses dans un sous-ensemble définissant la première image incluse dans le flux de données visuelles Vmds, lequel signal numérique est destiné à être converti et émis en un format analogique compatible avec le format d'entrée du poste de télévision TVS par les moyens de conversion CNVM en préalable au signal Tvms, préalablement à tout affichage d'une image chronologiquement postérieure à la première image dont sont représentatives les données véhiculées par le signal Als.

La procédure d'extraction, de conversion et d'alerte définie ci-dessus permettra d'attirer l'attention du destinataire sur l'arrivée d'un message vidéo qui lui est destiné, sans pour autant déclencher une projection intempestive de l'ensemble de ce message sur l'écran du poste de télévision TVS, dans des conditions qui pourraient être désagréables ou gênantes pour ce destinataire ou son entourage immédiat à l'instant où le message vidéo lui parvient. Le destinataire pourra, au vu de la première image affichée lors de l'étape d'alerte, déterminer s'il souhaite visionner le message vidéo immédiatement ou, au contraire, surseoir à une telle opération jusqu'à ce que des conditions plus favorables soient réunies, voire décider d'archiver ou de supprimer ce message sans même avoir visionné le reste de la séquence vidéo qu'il contient.

Le destinataire pourra signifier son choix aux moyens de conversion CNVM par le truchement d'une liaison sans fil, par exemple de type infra-rouge, Bluetooth ou Wi-Fi. D'autres outils d'interaction, tels des touches de commande disposées en façade de l'appareil constituant les moyens de conversion CNVM pourront en outre être mis à disposition du destinataire pour lui permettre de signifier son choix dans les circonstances sus-décrites.

Lorsque le destinataire aura signifié aux moyens de conversion CNVM sa volonté de recevoir l'ensemble du message vidéo, lesdits moyens de conversion CNVM émettront un signal de requête de diffusion Brqs à destination des moyens de traitement et d'interfaçage PRIM ; lesquels enverront en retour dans son intégralité un flux de données vidéo Vds contenant, non seulement la première image déjà diffusée dans le message d'alerte Als, mais aussi toutes les images chronologiquement postérieures à ladite première image, ainsi que, le cas échéant, toute bande sonore associée auxdites images.

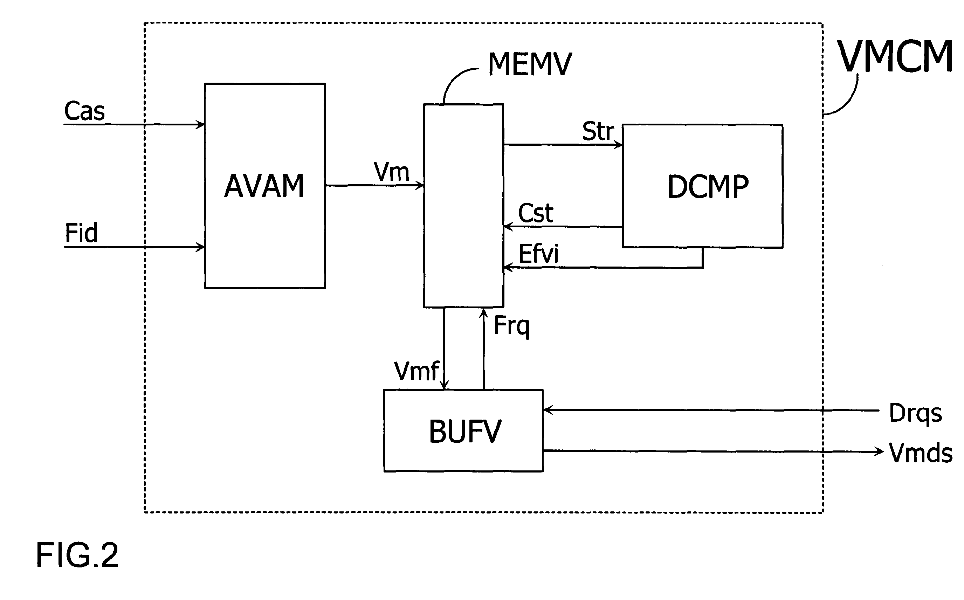

La Fig.2 décrit sous forme schématique un mode de réalisation possible des moyens d'élaboration VMCM de messages vidéo Vmds. Ces moyens comportent un module d'acquisition AVAM d'un ensemble de données numériques véhiculé par le signal Cas et représentatif de stimuli audiovisuels, dans cet exemple une séquence vidéo. Le module d'acquisition AVAM est en outre destiné à recevoir des données Fid préalablement incluses dans un fichier textuel conformément à la description qui précède, et à associer entre eux l'ensemble de données véhiculé par le signal Cas et les données textuelles Fid de façon à créer un message vidéo dit initial Vm. Les moyens d'élaboration VMCM incluent en outre un module de mémorisation MEMV destiné à mémoriser le message vidéo Vm ainsi créé.

Dans ce mode de réalisation particulier de l'invention, les moyens d'élaboration VMCM incluent également un module de compression DCMP des données audiovisuelles, qui est apte à produire, outre un flux de sortie compressé Cst(W) correspondant à un flux audio/vidéo d'entrée Str présélectionné et issu des moyens de mémorisation MEMV, un fichier extrait Efvi comprenant des données représentatives de la première image extraite dudit flux d'entrée Str et définie comme précédant toute autre image incluse dans ledit flux d'entrée Str. Le format de compression sera choisi parmi des formats aisément transmissibles via Internet, par exemple le format "Windows Media" (le signe "Windows Media" est protégé en tant que marque de fabrique et est connu de l'homme du métier pour désigner un format particulier de compression de données).

Le flux de sortie compressé Cst(W), accompagné du fichier extrait Efvi, peut alors remplacer l'ensemble de données numériques originellement contenu dans le message vidéo initial Vm pour former, en association avec le message textuel défini par les données Fid, un nouveau fichier Vmf contenant un message vidéo dit définitif, lequel fichier Vmf sera alors mémorisé dans les moyens de mémorisation MEMV, et pourra être produit en vue d'une transmission sous forme d'un flux de données visuelles Vmds vers son destinataire *via* un module de mise à disposition BUFV.

Ainsi qu'exposé précédemment, une telle mise à disposition du flux de données visuelles Vmds ne sera de préférence exécutée que consécutivement à la réception d'un signal de requête de données Drqs par le module de mise à disposition BUFV, qui répercutera ce signal sous forme d'une requête de fichier Frq aux moyens de mémorisation MEMV, en suite de quoi, et alors seulement, le flux de données visuelles Vmds sera produit par lesdits moyens de mémorisation MEMV *via* le module de mise à disposition BUFV.

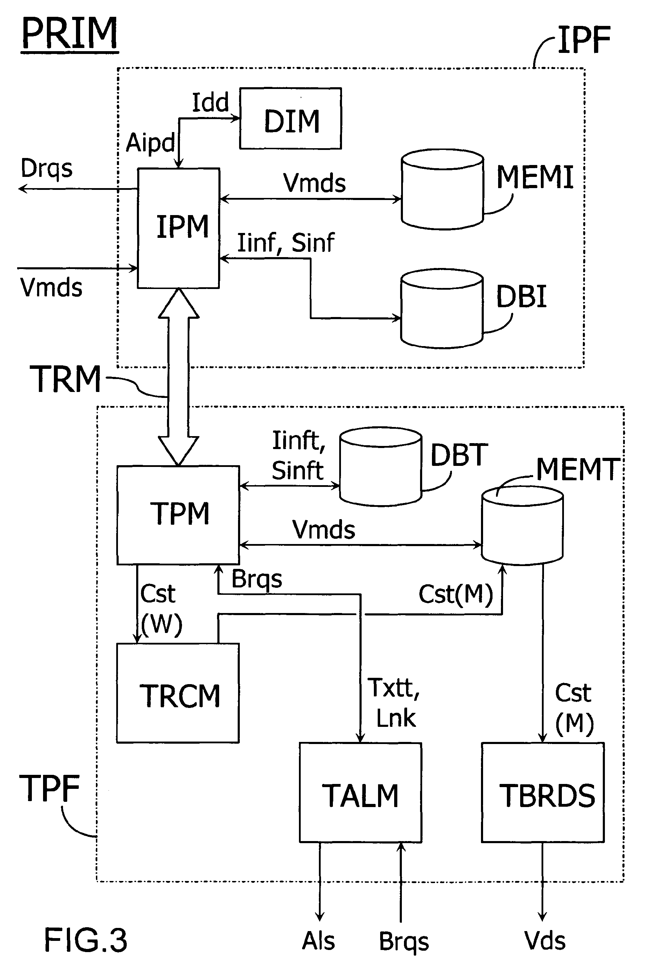

La Fig.3 illustre très schématiquement un mode de réalisation possible des moyens de traitement et d'interfaçage PRIM, qui peuvent être représentés sous forme d'une plate-forme d'émission IPF et d'une plate-forme de réception TPF, lesquelles plates-formes sont reliées entre elles par des moyens de transmission TRM qui pourront par exemple mettre en oeuvre le réseau Internet, ainsi éventuellement que d'autres réseaux de communication tels des réseaux téléphoniques câblés ou hertziens et des réseaux locaux filaires ou sans fil de type Wi-Fi. La plate-forme d'émission IPF peut ainsi être considérée comme essentiellement apparentée au monde Internet, tandis que la plate-forme de réception TPF est, elle, essentiellement apparentée au monde de la télévision traditionnelle, les moyens de transmission TRM servant à mettre en relation ces deux mondes.

La plate-forme d'émission IPF inclut un module d'interface IPM destiné à émettre des signaux de requêtes de données Drqs et à recevoir en retour des messages vidéo Vmds. Ce module d'interface IPM pourra être constitué par un serveur de réseau, couramment appelé "serveur Web" qui assurera, en coopération avec un module d'identification du destinataire DIM, par exemple un serveur de noms de domaines apte à produire une adresse Internet Aipd propre à un destinataire défini par son identifiant Idd extrait d'un message vidéo Vmds, un routage des messages vidéo Vmds vers les destinataires identifiés dans lesdits messages Vmds. La plate-forme d'émission IPF inclut en outre un espace mémoire MEMI, qui sera par exemple constitué par un disque dur inclus dans le serveur Web précité, et qui est destiné à stocker les messages vidéo Vmds après réception. Une base de données DBI également incluse dans la plate-forme d'émission IPF permet par ailleurs un stockage et une tenue à jour d'informations intrinsèques Iinf telles l'identité de l'expéditeur du message, celle de son destinataire, la nature purement vidéo ou assortie d'une bande audio de la séquence définie par l'ensemble de données numériques associée au message vidéo concerné, etc. La base de données DBI permet aussi un stockage et une tenue à jour d'informations d'état Sinf telles des statuts "envoyé", "non lu", "lu", etc. relatifs aux messages Vmds stockés dans l'espace mémoire MEMI. La base de données DBI pourra par exemple être une base de type "MySQL" installée sur le serveur Web évoqué plus haut (le signe "MySQL" est protégé en tant que marque de fabrique, et connu de l'homme du métier pour désigner un modèle particulier de base de données).

La plate-forme de réception TPF inclut un module d'interface et de gestion TPM destiné à répercuter vers la plate-forme d'émission IPF toute requête de diffusion Brqs et à recevoir depuis ladite plate-forme d'émission IPF des messages vidéo Vmds. Ce module d'interface et de gestion TPM pourra être composé de scripts exécutés sur un serveur Web (PHP).

La plate-forme de réception TPF inclut en outre un espace mémoire MEMT, qui sera par exemple constitué par un disque dur inclus dans le serveur Web (PHP) précité, et qui est destiné à stocker les messages vidéo Vmds après réception. Une base de données DBT également incluse dans la plate-forme de réception TPF permet par ailleurs un stockage et une tenue à jour d'informations intrinsèques linft telles l'identité de l'expéditeur du message, celle de son destinataire, la nature purement vidéo ou assortie d'une bande audio de la séquence définie par l'ensemble de données numériques associée au message vidéo concerné, etc. La base de données DBT permet aussi un stockage et une tenue à jour d'informations d'état Sinft telles des statuts "envoyé", "non lu", "lu", etc. relatifs aux messages Vmds stockés dans l'espace mémoire MEMT. La base de données DBT pourra par exemple être une base de type "MySQL", et pourra éventuellement être mutualisée avec la base de données DBI incluse dans la plate-forme d'émission décrite plus haut.

La plate-forme de réception TPF inclut de plus un module de transcodage TRCM, apte à recevoir un flux de données Cst(W) qui auront préalablement compressés en un format aisément transmissible *via* Internet, par exemple le format "Windows Media", et à transcoder ce flux de données en un flux Cst(M) compatible avec le format d'entrée des moyens de conversion décrits plus haut, par exemple le format MPEG2 ou le format MPEG4.

La plate-forme de réception TPF inclut enfin un module d'émission d'alerte TALM, apte à produire un signal numérique d'alerte Als porteur de données définissant la première image d'un message vidéo, ledit signal d'alerte Als pouvant optionnellement être amené à véhiculer un message textuel Txtt et/ou un lien hypertexte Lnk enjoignant le destinataire du signal d'alerte Als à requérir une diffusion d'une séquence audiovisuelle stockée à un endroit défini par ledit lien hypertexte. Le destinataire pourra alors formuler une requête de diffusion Brqs, que le module d'émission d'alerte TALM est apte à recevoir et à transmettre au module d'interface et de gestion TPM, en suite de quoi un module de diffusion TBRDS également inclus dans la plate-forme de réception TPF produira à l'intention des moyens de conversion décrits plus haut le flux de données Cst(M) identifié dans la requête de diffusion Brqs et extrait de l'espace mémoire MEMT.

L'invention décrite ci-dessus permettra donc à n'importe quel particulier convenablement équipé de faire parvenir à un poste de télévision mis à disposition d'un destinataire de son choix un message audiovisuel qui sera spécifiquement prévu à l'intention particulière de ce destinataire, lequel pourra optionnellement jouir de la faculté discrétionnaire d'autoriser, de reporter dans le temps ou de refuser la diffusion dudit message vidéo sur son poste de télévision.

## Revendications

1. Procédé de transmission de données incluant une étape de restitution de stimuli visuels au moyen d'un poste de télévision, lequel procédé inclut :
. une étape de création d'au moins un ensemble de données numériques représentatives de stimuli audiovisuels,
. une étape d'élaboration d'un message textuel dit message vidéo, lequel message étant destiné à être associé audit ensemble de données et à être muni d'au moins un identifiant définissant au moins un destinataire dudit message,
. une étape d'identification du destinataire au moyen de son identifiant,
. une étape de transmission du message vidéo vers ledit destinataire sous forme d'un flux de données numériques, et
. une étape de conversion dudit flux de données numériques en un signal analogique compatible avec un format d'entrée prédéfini pour ledit poste de télévision.

2. Procédé selon la revendication 1, **caractérisé en ce qu'**il inclut en outre une étape d'avertissement, destinée à être exécutée postérieurement à une étape de transmission, au cours de laquelle un stimulus est produit au destinataire en vue de l'avertir qu'un message vidéo a été émis à son intention.

3. Procédé selon la revendication 2, **caractérisé en ce que** l'étape d'avertissement inclut les sous-étapes suivantes :
. une sous-étape d'extraction, depuis ledit ensemble de données, d'un sous-ensemble de données représentatives d'une première image précédant toute autre image incluse dans le message vidéo,
. une sous-étape de conversion des données incluses dans le sous-ensemble ainsi extrait en un signal d'alerte compatible avec ledit format d'entrée, et
. une sous-étape d'alerte au cours de laquelle ladite première image est affichée sur l'écran de télévision du destinataire, préalablement à tout affichage d'une image chronologiquement postérieure à la première image.

4. Procédé selon la revendication 3, **caractérisé en ce que** tout affichage d'images chronologiquement postérieures à la première image est subordonné à une exécution préalable par le destinataire d'une étape de commande d'affichage consécutive à une sous-étape d'alerte.

5. Procédé selon l'une des revendications 1 à 4, **caractérisé en ce qu'**il inclut en outre une étape de conversion en un format compressé dudit ensemble de données, destinée à être exécutée préalablement à l'étape de transmission.

6. Système de transmission de données permettant une restitution de stimuli visuels au moyen d'un poste de télévision, lequel système inclut :
. des moyens de création d'au moins un ensemble de données numériques représentatives de stimuli audiovisuels,
. des moyens d'élaboration d'un message textuel dit message vidéo, lequel message étant destiné à être associé audit ensemble de données et à être muni d'au moins un identifiant définissant au moins un destinataire dudit message,
. des moyens d'identification du destinataire au moyen de son identifiant,
. des moyens de transmission du message vidéo vers ledit destinataire sous forme d'un flux de données numériques, et
. des moyens de conversion dudit flux de données numériques en un signal analogique compatible avec un format d'entrée prédéfini pour ledit poste de télévision.
